# EUROPEAN PATENT APPLICATION

(11) **EP 4 708 625 A1**
(43) Date of publication of application: **11.03.2026**
(21) Application number: 25194440.1
(22) Date of filing: 06.08.2025
(51) Int. Cl.: H02J 7/44, H02J 7/46, H02J 7/80

(54) **DEVICE AND METHOD FOR BATTERY COMMUNICATION MANAGEMENT**

(30) Priority: 10.09.2024 KR 20240123294
(71) Applicant: SAMSUNG SDI CO., LTD., Yongin-si, Gyeonggi-do 17084 (KR)
(72) Inventor: SIM, Sangbong, Yongin-si 17084 (KR)
(74) Representative: Marks & Clerk LLP

(57) **Abstract**

A battery communication management device, including a rack battery management part including a microcontroller and an interface converter, and a plurality of module battery management parts in serial connection with the rack battery management part and managed by the rack battery management part, wherein each of the plurality of module battery management parts manages a battery module, each of the plurality of module battery management parts includes an analog front end, and the microcontroller determines a type of communication failure between the rack battery management part and the plurality of module battery management parts.

## Description

### BACKGROUND

### 1. Field

Embodiments relate to a device and method for battery communication management.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include a battery communication management device, including a rack battery management part including a microcontroller and an interface converter, and a plurality of module battery management parts in serial connection with the rack battery management part and managed by the rack battery management part, wherein each of the plurality of module battery management parts manages a battery module, each of the plurality of module battery management parts includes an analog front end, and the microcontroller determines a type of communication failure between the rack battery management part and the plurality of module battery management parts.

The serial connection may include a daisy chain method.

The microcontroller and the interface converter may be connected to each other in a serial peripheral interface communication method.

The rack battery management part may be connected to the plurality of module battery management parts in a universal asynchronous receiver/transmitter method.

The microcontroller may transmits a transmit packet to each of the plurality of module battery management parts via the interface converter, and each of the plurality of module battery management parts may measure state information of the battery module managed by each of the plurality of module battery management parts in response to the transmit packet, each of the plurality of module battery management parts transmitting a receive packet including the state information to the microcontroller.

The microcontroller may determine the type of communication failure based on the receive packet.

A first communication failure type of the type of communication failure may be defined as falling within a case where a number of the receive packets is less than a number of analog front ends, or a case where a first cyclic redundancy check within the receive packet and a second cyclic redundancy check obtained by processing the receive packet are different from each other.

If the type of communication failure is determined as the first communication failure type by the microcontroller, the microcontroller may initialize the analog front end.

A second communication failure type of the type of communication failure may be defined as falling within a case where the microcontroller has not received the receive packet or a case where data included in the receive packet is an initial value maintained for a first threshold time.

If the type of communication failure is determined to be the second communication failure type by the microcontroller, the microcontroller may initialize the interface converter.

A third communication failure type of the type of communication failure may be defined as falling within a case where the microcontroller has not received the receive packet or a case where the data included in the receive packet is an initial value maintained for a second threshold time, wherein the second threshold time is longer than the first threshold time.

If the type of communication failure is determined as the third communication failure type by the microcontroller, the microcontroller may perform a soft shutdown of the analog front end.

A fourth communication failure type of the type of communication failure may be defined as falling within a case where the microcontroller has not received the receive packet or a case where the data included in the receive packet is an initial value maintained for a third threshold time, wherein the third threshold time is longer than the second threshold time.

If the type of communication failure is determined as the fourth communication failure type by the microcontroller, the microcontroller may perform a hard shutdown of the interface converter.

The third threshold time may be 30 seconds or less.

Embodiments include a battery communication management method, including transmitting, by a microcontroller, a transmit packet to a plurality of module battery management parts via an interface converter, generating, by each of the plurality of module battery management parts, a receive packet in response to the transmit packet, transmitting, by each of the plurality of module battery management parts, the receive packet to the microcontroller via the interface converter, and determining, by the microcontroller, a type of communication failure between a rack battery management part and the plurality of module battery management parts based on the receive packet, wherein the rack battery management part includes the microcontroller and the interface converter, the plurality of module battery management parts are connected in series with the rack battery management part, and each of the plurality of module battery management parts includes an analog front end.

A first communication failure type of the type of communication failure may be defined as falling within a case where a number of the receive packets is less than a number of the analog front end, or a case where a first cyclic redundancy check included in the receive packet and a second cyclic redundancy check obtained by processing the receive packet are different from each other, the method further including initializing, by the microcontroller, the analog front end if the type of communication failure is determined as the first communication failure type by the microcontroller.

A second communication failure type of the type of communication failure may be defined as falling within a case where the microcontroller has not received the receive packet, or a case where data included in the receive packet is an initial value maintained for a first threshold time, the method may further include initializing, by the microcontroller, the interface converter if the type of communication failure is determined as the second communication failure type by the microcontroller.

A third communication failure type of the type of communication failure may be defined as falling within a case where the microcontroller has not received the receive packet, or a case where the data included in the receive packet is an initial value maintained for a second threshold time, wherein the second threshold time may be longer than the first threshold time, the method may further include performing, by the microcontroller, a soft shutdown of the analog front end if the type of communication failure is determined as the third communication failure type by the microcontroller.

A fourth communication failure type of the type of communication failure may be defined as falling within a case where the microcontroller has not received the receive packet, or a case where the data included in the receive packet is an initial value maintained for a third threshold time, wherein the third threshold time is longer than the second threshold time, and the microcontroller may perform a hard shutdown of the interface converter if the type of communication failure is determined as the fourth communication failure type by the microcontroller.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below. At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail example embodiments with reference to the attached drawings, in which:
FIG. 1 shows a battery communication management device according to one or more embodiments of the present disclosure;
FIG. 2 is a block diagram of a battery communication management device according to one or more embodiments of the present disclosure;
FIG. 3 is a block diagram showing the configuration of a module battery management part according to one or more embodiments of the present disclosure;
FIG. 4 is a diagram showing a transmit packet Tx and a receive packet Rx in a case where communication is performed normally according to one or more embodiments of the present disclosure;
FIG. 5 is a diagram showing a transmit packet and a receive packet in a case where a communication failure has occurred according to one or more embodiments of the present disclosure;
FIG. 6 is a diagram showing a transmit packet and a receive packet in a case where a communication failure has occurred according to one or more embodiments of the present disclosure;
FIG. 7 is a diagram showing a transmit packet and a receive packet in a case where a communication failure has occurred according to one or more embodiments of the present disclosure;
FIG. 8 is a flowchart for determining the type of communication failure according to one or more embodiments of the present disclosure;
FIG. 9 is a flowchart for determining the type of communication failure according to one or more embodiments of the present disclosure;
FIG. 10 is a flowchart showing a battery communication management method 1000 according to one or more embodiments of the present disclosure; and
FIG. 11 is a diagram showing a procedure in which the microcontroller determines whether there is a communication failure or the type of communication failure according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

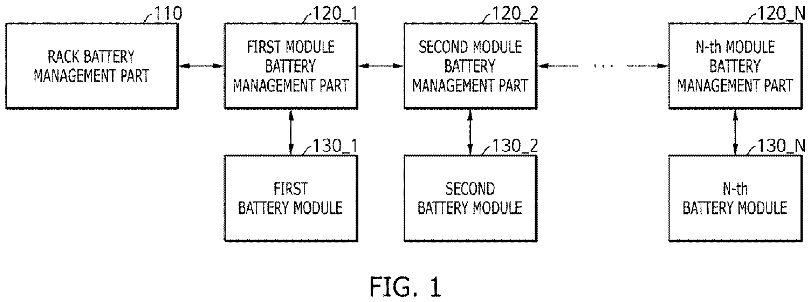

FIG. 1 shows a battery communication management device according to one or more embodiments of the present disclosure.

In one or more embodiments, the battery communication management device may include a rack battery management part 110 and a plurality of module battery management parts 120_1 to 120_N. Each of the rack battery management part 110 and each the plurality of module battery management parts 120_1 to 120_N may include at least one processor.

In the present disclosure, the rack battery management part may be referred to as a primary battery management part that manages the plurality of module battery management parts, and the module battery management part may be referred to as a kind of secondary battery management part under the management of the rack battery management part.

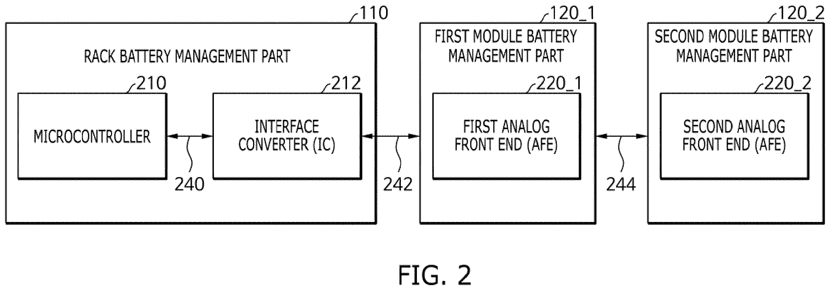

In one or more embodiments, the rack battery management part 110 may transmit and receive information to and from the plurality of module battery management parts 120_1 to 120_N. The rack battery management part 110 and the plurality of module battery management parts 120_1 to 120_N may transmit and receive information to and from each other using universal asynchronous receiver/transmitter (UART) communication. However, the rack battery management part 110 and the plurality of module battery management parts 120_1 to 120_N may transmit and receive information to and from each other using, for example, controller area network (CAN) communication. A description of the communication protocol between the rack battery management part 110 and the plurality of module battery management parts 120_1 to 120_N will be given later in conjunction with the description of FIG. 2.

In one or more embodiments, each of the plurality of module battery management parts 120_1 to 120_N may manage a battery module to which each management part is connected. For example, each of the plurality of module battery management parts 120_1 to 120_N may monitor and manage the state information of battery cells 130_1 to 130_N associated with each management part. The state information of the battery cells may include fuse information, switch information, voltage information, current information, temperature information, operating mode information, charge state, resistance information, state of health (SOH), etc.

In one or more embodiments, the rack battery management part 110 may request the state information of a battery cell connected to each of the plurality of module battery management parts 120_1 to 120_N from each of the plurality of module battery management parts 120_1 to 120_N. The rack battery management part 110 may generate a transmit packet (Tx Packet) including this request and transmit it to the plurality of module battery management parts 120_1 to 120_N.

In one or more embodiments, the plurality of module battery management parts 120_1 to 120_N may receive the transmit packet, and each generate a receive packet (Rx Packet) including data associated with state information in response to a request for the state information included in the corresponding transmit packet. Further, each of the plurality of module battery management parts 120_1 to 120_N may transmit the receive packet to the rack battery management part 110.

A communication failure may occur in the data transmission and reception process between the rack battery management part 110 and the plurality of module battery management parts 120_1 to 120_N. For example, the plurality of module battery management parts 120_1 to 120_N may not correctly receive the transmit packet from the rack battery management part 110. Further, even if each of the plurality of module battery management parts 120_1 to 120_N receives the transmit packet and generates a receive packet in response to the transmit packet, the rack battery management part 110 may not correctly receive the receive packet due to a communication failure.

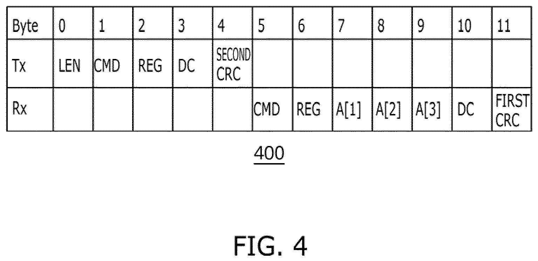

In one or more embodiments, the rack battery management part 110 may identify the location where the communication failure occurred and perform communication recovery work appropriate for that location. For example, the rack battery management part 110 may specifically identify whether the cause of the occurrence of the communication failure is within the rack battery management part or in a particular module battery management part of the plurality of module battery management parts 120_1 to 120_N. The details of the rack battery management part 110 determining whether there is a communication failure or the type of communication failure will be described later in conjunction with the description of FIG. 4 and subsequent drawings.

In the present disclosure, whether there is a communication failure may mean whether a failure itself has occurred in communication, and the type of communication failure may mean which type the occurred failure falls into. The type may be a meaning that encompasses the location where the communication failure occurred, the cause of the communication failure, the measures to be taken in response to the communication failure, etc.

Through such a configuration, when a communication failure occurs between the rack battery management part and the module battery management parts of the energy storage system, the recovery method can be typified differentially (i.e. different recovery methods selected) according to the type of communication failure. Accordingly, the communication failure time can be minimized and the measurement of the battery cell voltage or temperature can be normalized quickly.

FIG. 2 is a block diagram of a battery communication management device according to one or more embodiments of the present disclosure. Referring to FIG. 2, the battery communication management device may include a rack battery management part 110 and a plurality of module battery management parts 120_1 and 120_2. FIG. 2 will be described on the premise that the plurality of module battery management parts includes a first module battery management part 120_1 and a second module battery management part 120_2.

In one or more embodiments, the rack battery management part 110 may include a microcontroller (MCU) 210 and an interface converter (IC) 212. The microcontroller 210 and the interface converter 212 may be connected to each other according to a first communication protocol 240, and the first communication protocol 240 may include a Serial Peripheral Interface (SPI) communication method.

In one or more embodiments, the microcontroller 210 may perform data collection, system control, protection functions, and communication management. Accordingly, the battery state can be optimized, the stability and reliability of the system can be guaranteed, and communication failures between the rack battery management part and the plurality of modules can be recovered differentially according to the type of communication failure.

In one or more embodiments, the interface converter 212 may perform a function of converting and transferring data between devices using different communication protocols. Accordingly, system integration can be maintained in various communication environments. In the present disclosure, the interface converter 212 may be used to mean that it encompasses all components that enable communication between devices using different types of interfaces.

In one or more embodiments, the rack battery management part 110 may be connected in series with the plurality of module battery management parts 120_1 and 120_2. The rack battery management part 110 and the plurality of module battery management parts 120_1 and 120_2 may be connected in series in a daisy chain method. The daisy chain method may be a configuration such that the rack battery management part 110 is connected directly to the first module battery management part 120_1, which in turn is connected directly to the second module battery management part 120_2 The serial connection may include connections by a second communication protocol 242 and a third communication protocol 244. One or both of the second communication protocol 242 and the third communication protocol 244 may be the same or different to the first communication protocol 240, and/or the same or different to each other.

In one or more embodiments, the rack battery management part 110 may be connected with the plurality of module battery management parts according to the second communication protocol 242. The second communication protocol 242 may include a universal asynchronous receiver/transmitter (UART) method.

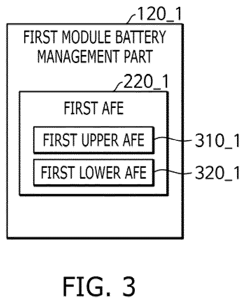

In one or more embodiments, each of the plurality of module battery management parts may include an analog front end (AFE). Referring to FIG. 2, the first module battery management part 120_1 may include a first analog front end 220_1. Further, the second module battery management part 120_2 may include a second analog front end 220_2. A description of the analog front end included in the module battery management part will be given later in the description of FIG. 3.

In one or more embodiments, the plurality of module battery management parts may be connected to each other according to the third communication protocol 244. For example, the third communication protocol 244 may include a universal asynchronous receiver/transmitter (UART) method. However, the first communication protocol 240, the second communication protocol 242, and the third communication protocol 244 may be the same or different from each other.

In one or more embodiments, the analog front ends 220_1 and 220_2 may perform a function of collecting analog signals and transferring them to a digital system according to a request battery cell state information. For example, when the analog front ends 220_1 and 220_2 receive a request for real-time voltage, current, or temperature information of a battery cell from the microcontroller 210, the analog front ends 220_1 and 220_2 may collect analog information of the state information of the battery cell, convert it into a digital signal, and transmit it to the microcontroller 210.

FIG. 3 is a block diagram showing the configuration of a module battery management part according to one or more embodiments of the present disclosure. In one or more embodiments, the module battery management part may include one or more analog front ends. FIG. 3 shows only a first module battery management part, which represents one example of a plurality of module battery management parts.

In one or more embodiments, the first module battery management part 120_1 may include a first analog front end 220_1. Further, the first analog front end 220_1 may include a first upper analog front end (Upper AFE) 310_1 and a first lower analog front end (Lower AFE) 310_2. Here, the first upper analog front end may have an initial value set to 0xFF, and the first lower analog front end may have an initial value set to 0x00.

FIG. 4 is a diagram showing a transmit packet Tx and a receive packet Rx in a case where communication is performed normally, i.e. without error, according to one or more embodiments of the present disclosure. The table 400 shown in FIG. 4 assumes an example in which the battery communication management device includes three module battery management parts, and each of the module battery management parts includes one analog front end. That is, a case where the total number of analog front ends included in the battery communication management device is shown as three, but the number of analog front ends may vary.

In one or more embodiments, the microcontroller may transmit a transmit packet Tx including information requesting a battery cell state to each of the plurality of module battery management parts via the interface converter. Further, each of the plurality of module battery management parts may generate a receive packet Rx in response to the transmit packet, and transmit the receive packet to the microcontroller via the interface converter. Figure 4 depicts the sequential transmission of each element of the transmit packet Tx, followed by the sequential transmission of each element of the receive packet Rx.

In one or more embodiments, the transmit packet may include various fields associated with the battery cell state request. Referring to FIG. 4, the transmit packet may include LEN, CMD, REG, DC, and second CRC fields.

Here, the LEN field is a length field and may indicate the entire length of information of the transmit packet. Accordingly, through the LEN field, each of the plurality of module battery management parts may check whether the received transmit packet has been received in the correct length.

Further, the CMD field is a command field and may indicate information on a command that the transmit packet should execute. For example, a command to read data on voltage or temperature information of a particular battery cell, or to perform a battery cell balancing operation, etc., may be included in the CMD field.

Moreover, the REG field is a register field and may indicate register address information for storing or reading particular data. Based on this, the microcontroller may determine where to store or read the data requested through the transmit packet.

Furthermore, the DC field is a data containing field and may indicate battery cell state information, etc., that is to be requested. For example, if the voltage of a battery cell is requested, information on the voltage value of the battery cell may be included in the DC field.

Moreover, the second CRC field is a second cyclic redundancy check field and may be used to detect possible errors during data transmission. For example, the microcontroller may encode the second cyclic redundancy check based on information included in the receive packet, which will be described later. Further, the microcontroller may verify data integrity by comparing a first cyclic redundancy check (first CRC) and the second cyclic redundancy check included in the receive packet and determine whether there is a communication failure or the type of communication failure.

In one or more embodiments, the receive packet Rx may include various fields related to a response to the battery cell state request. Referring to FIG. 4, the receive packet may include CMD, REG, A[1], A[2], A[3], DC, and a first CRC. However, a LEN field including length information of the receive packet and the like may also be included.

Here, CMD is a command field and may indicate response or instruction information to the command of the transmit packet. Further, REG is a register field and may indicate address information used to read data requested by the microcontroller or to access a particular register. Moreover, DC may indicate state information of a battery cell (e.g., a real-time voltage, a temperature measurement value, etc., of a battery cell) requested by the microcontroller.

Furthermore, the first CRC is a first cyclic redundancy check field, and may indicate a cyclic redundancy check encoded by a plurality of analog front ends, based on the state information of the battery cells measured and collected by the analog front ends.

Further, A[N] (e.g., A[1], A[2] and A[3]) is a response field of an analog front end and may indicate information that the N-th analog front end has responded to the transmit packet received from the microcontroller. For example, referring to FIG. 4, the receive packet includes A[1], A[2], and A[3], and the total number of analog front ends (3) included in the battery communication management device and the number of responses of the analog front ends (3) are the same. Accordingly, it is possible to extract information that at least all analog front ends included in the battery communication management device have normally received and responded to the transmit packet from the microcontroller.

FIG. 4 corresponds to a case where communication between the rack battery management part and the plurality of module battery management parts or communication between the microcontroller and the plurality of analog front ends is normal. First, the number of responses of the analog front ends (3) included in the receive packet and the number of analog front ends (3) included in the battery communication management device are equal to each other. Accordingly, it can be determined that at least all of the analog front ends have normally received the transmit packet and responded to the microcontroller.

Further, if the first cyclic redundancy check (first CRC) included in the receive packet received by the microcontroller and calculated or updated by the plurality of analog front ends and the second cyclic redundancy check (second CRC) calculated by the microcontroller based on the rest of the information (e.g., DC, etc.) included in the receive packet are identical, it can be determined that all the information measured and collected by the plurality of analog front ends has been normally transferred to the microcontroller. That is, it can be determined that all the battery cell state information collected by the analog front ends has been normally transferred to the microcontroller.

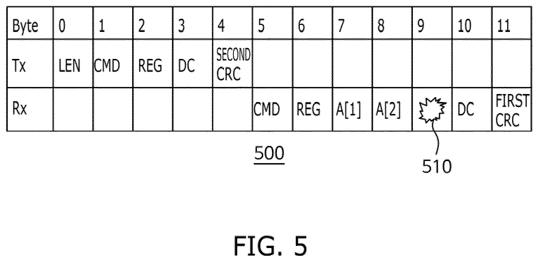

FIG. 5 is a diagram showing a transmit packet and a receive packet in a case where a communication failure has occurred according to one or more embodiments of the present disclosure. FIG. 5 may show a type of communication failure associated with some of the response fields of the analog front end being missing in the receive packet. In the description related to FIG. 5, the specifics that overlap with FIG. 4 may be omitted.

In one or more embodiments, some of the plurality of analog front ends included in the battery communication management device may respond to the transmit packet, and the others may not respond due to the occurrence of a communication failure.

Referring to the table 500 shown in FIG. 5, A[1] and A[2] included in the receive packet may indicate information that a first analog front end and a second analog front end have received and responded to the transmit packet from the microcontroller. However, with A[1] and A[2] alone, it is not possible to know whether the battery cell state information collected by the first analog front end and the second analog front end in response to the transmit packet has been normally transferred to the microcontroller. This can be determined by whether the first CRC and second CRC values are equal to each other.

However, because A[3] is missing 510 in the receive packet, it can be known that a communication failure associated with the third analog front end has occurred. For example, a communication failure may have occurred, and thus, the third analog front end may not have normally received a transmit packet from the microcontroller. Or, the third analog front end may have normally received a transmit packet from the microcontroller, but may not have normally transmitted a receive packet to the microcontroller due to the occurrence of a communication failure.

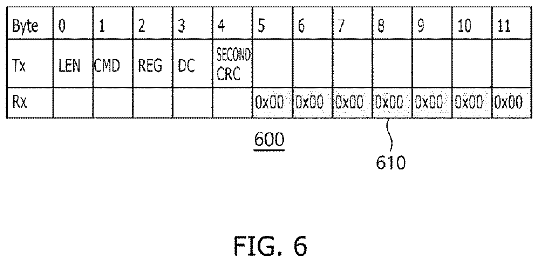

FIG. 6 is a diagram showing a transmit packet and a receive packet in a case where a communication failure has occurred according to one or more embodiments of the present disclosure. The table 600 shown in FIG. 6 may indicate a type of communication failure associated with the entirety of the receive packet being initial values 610. In the description related to FIG. 6, the specifics that overlap with FIGS. 4 and 5 may be omitted.

In one or more embodiments, a particular communication failure may occur, and all of the plurality of analog front ends included in the battery communication management device may not respond to the transmit packet. Accordingly, the information (e.g., LEN, REG, CMD, DC, A[x], first CRC, etc.; see FIG. 5) included in the receive packet (or, equivalently, in the byte positions in which the receive packet was expected) detected by the microcontroller from the plurality of module battery management parts may all correspond to the initial value 0x00.

As one example, all of the analog front ends may not have received the transmit packet. For example, an error may occur in the interface converter. Accordingly, the transmit packet transmitted by the microcontroller may not be transferred to the plurality of module battery management parts via the interface converter. Or, the transmit packet transmitted by the microcontroller may have been transferred to the plurality of module battery management parts via the interface converter, but the receive packet transmitted by the plurality of module battery management parts may not be transferred to the microcontroller via the interface converter.

As another example, all of the analog front ends may have received the transmit packet but may not respond to the transmit packet. For example, the interface converter may operate normally. Accordingly, the transmit packet transmitted by the microcontroller may have reached the plurality of module battery management parts via the interface converter. However, all of the analog front ends may have an error (e.g., a malfunction) occurred therein and may not respond to the transmit packet.

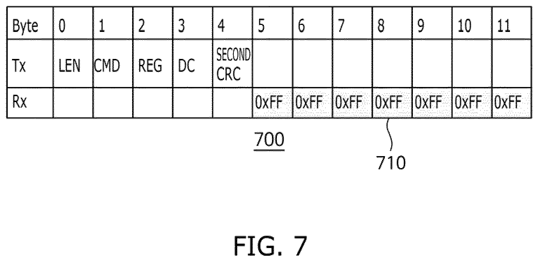

FIG. 7 is a diagram showing a transmit packet and a receive packet in a case where a communication failure has occurred according to one or more embodiments of the present disclosure. The table 700 shown in FIG. 7 may indicate a type of communication failure associated with the entirety of the receive packet being initial values 710. In the description related to FIG. 7, the specifics that overlap with FIGS. 4 to 6 may be omitted.

In one or more embodiments, a particular communication failure may occur, and all of the plurality of analog front ends included in the battery communication management device may not respond to the transmit packet. Accordingly, the information (e.g., LEN, REG, CMD, DC, A[x], first CRC, etc.) included in the receive packet detected by the microcontroller (or, equivalently, in the byte positions in which the receive packet was expected) from the plurality of module battery management parts may all correspond to the initial value 0xFF.

In one or more embodiments, one module battery management part may include one analog front end, as in FIGS. 1 and 2. Further, the initial value of the analog front end may be set to 0x00 as in FIG. 6, or may be set to 0xFF as in FIG. 7, or another arbitrary initial value.

In one or more embodiments, one module battery management part may include two analog front ends as in FIG. 3. Referring to FIG. 3, a first module battery management part may include a first upper analog front end and a first lower analog front end. Here, the initial value of the first upper analog front end may be set to 0xFF, and the initial value of the first lower analog front end may be set to 0x00. Here, if all of the plurality of analog front ends included in the battery management device do not respond to the transmit packet, the receive packet associated with the first upper analog front end may all be measured as 0xFF as in FIG. 7, and the receive packet associated with the first lower analog front end may all be measured as 0x00 as in FIG. 6.

Through the configuration as above, the microcontroller can estimate whether there is a communication failure or the type of communication failure between the rack battery management part and the module battery management parts based on the receive packet.

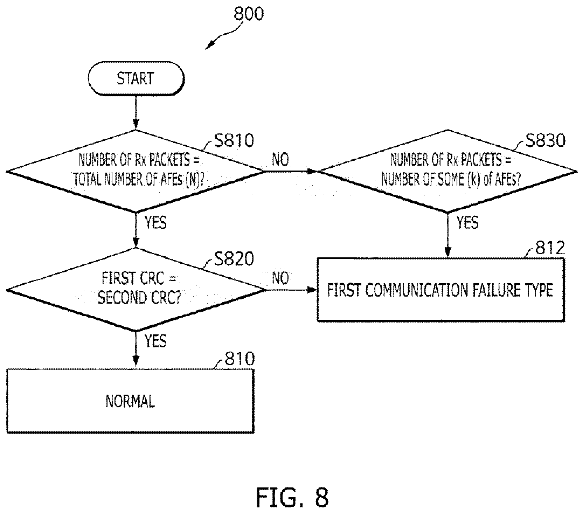

FIG. 8 is a flowchart 800 for determining the type of communication failure according to one or more embodiments of the present disclosure. Referring to FIG. 8, the microcontroller may determine whether there is a communication failure or the type of communication failure between the rack battery management part and the plurality of module battery management parts based on a receive packet. Here, a description will be made on the premise that the total number of analog front ends included in the battery communication management device is N. Here, N may correspond to a natural number.

**In** one or more embodiments, the microcontroller may transmit a transmit packet to each of the plurality of module battery management parts via the interface converter. Each of the plurality of module battery management parts may measure state information of the battery module managed by each of the plurality of module battery management parts in response to the transmit packet. Further, each of the plurality of module battery management parts may transmit a receive packet including the state information to the microcontroller via the interface converter. The microcontroller may determine whether there is a communication failure or the type of communication failure based on the receive packet.

**In** one or more embodiments, the microcontroller may compare the number of responses of the analog front end (or the number of Rx Packets) included in the receive packet with the total number of analog front ends (N) included in the battery communication management device (S810).

**In** one or more embodiments, if it is determined that the number of Rx Packets and the total number of analog front ends (N) included in the battery communication management device are equal, the microcontroller may compare a first cyclic redundancy check included in the receive packet with a second cyclic redundancy check calculated by the microcontroller based on the information included in the receive packet (S820).

**In** one or more embodiments, if it is determined by the microcontroller that the number of Rx Packets and the total number of analog front ends (N) included in the battery communication management device are equal and the first cyclic redundancy check and the second cyclic redundancy check are the same, the communication between the rack battery management part and the module battery management parts may be determined to be normal 810.

**In** one or more embodiments, if it is determined by the microcontroller that the number of Rx Packets and the total number of analog front ends (N) included in the battery communication management device are equal to each other and the first cyclic redundancy check and the second cyclic redundancy check are different, it may be determined that a first communication failure type 812 has occurred.

**In** one or more embodiments, if it is determined that the number of Rx Packets and the total number of analog front ends (N) included in the battery communication management device are different from each other, the microcontroller may compare whether the number of Rx Packets corresponds to the number of some (k) of the analog front ends included in the battery communication management device (S830). Here, k may correspond to a natural number less than N.

**In** one or more embodiments, even if it is determined by the microcontroller that the number of Rx Packets corresponds to the number of some (k) of the analog front ends included in the battery communication management device, it may be determined that the first communication failure type 812 has occurred.

The first communication failure type 812 may include a case where all of the plurality of analog front ends have transmitted a receive packet to the microcontroller via the interface converter in response to the transmit packet (the number of Rx Packets = N), but all or part of the battery cell state information collected by the plurality of analog front ends has been incorrectly transferred (the first CRC ≠ the second CRC).

Further, the first communication failure type 812 may also include a case where even if all of the plurality of analog front ends have received the transmit packet transmitted by the microcontroller via the interface converter, only some (N-k) of the plurality of analog front ends have transferred the receive packet to the microcontroller via the interface converter in response to the transmit packet, and the others (k) have not responded to the transmit packet or the receive packet corresponding thereto has not been transferred to the microcontroller.

Here, if the first communication failure type 812 is determined by the microcontroller, it can be presumed that at least the interface converter is operating normally. Accordingly, the microcontroller may initialize all of the analog front ends or may initialize only the analog front ends identified as the problematic analog front ends by analyzing the receive packet. Thereafter, if all or some of the analog front ends are initialized, the microcontroller may transfer the transmit packet again and request battery cell state information.

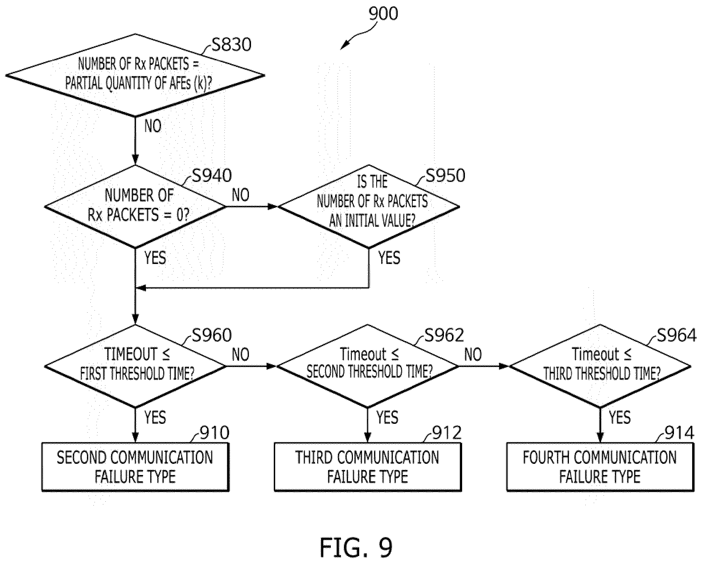

FIG. 9 is a flowchart 900 for determining the type of communication failure according to one or more embodiments of the present disclosure. FIG. 9 shows a flowchart for determining second to fourth communication failure types. In the description related to FIG. 9, the specifics that overlap with FIG. 8 may be omitted.

In one or more embodiments, if the number of Rx Packets and the total number of analog front ends (N) included in the battery communication management device are compared with each other (S810 in FIG. 8) and determined to be different from each other, and the number of Rx Packets and the number of some (k) of the analog front ends included in the battery communication management device are compared with each other (S830) and determined to be different from each other, then the microcontroller may determine whether the number of Rx Packets corresponds to zero (S940).

In one or more embodiments, if it is determined by the microcontroller that the number of Rx Packets is zero, this may be determined as a Timeout state. That is, it may be determined as a state in which the microcontroller has not currently received any receive packets from the plurality of analog controller units.

In one or more embodiments, if it is determined by the microcontroller that the number of Rx Packets does not correspond to zero but the entire data included in the Rx Packets corresponds to the initial value (e.g., 0x00 in FIG. 6, 0xFF in FIG. 7, etc.), this may be determined as a Timeout state. That is, it may be determined as a state in which the microcontroller has not currently received any receive packets corresponding to an actual response to the transmit packet at all from the plurality of analog controller units.

**In** one or more embodiments, if a Timeout state is determined by the microcontroller, the microcontroller may measure the time for which the Timeout state has lasted. Here, the microcontroller may determine whether the time for which the Timeout state has lasted falls within a first threshold time (S960), whether it exceeds the first threshold time but falls within a second threshold time (S962), and whether it exceeds the second threshold time but falls within a third threshold time (S964).

**In** one or more embodiments, if it is determined by the microcontroller that the time for which the Timeout state has lasted falls within the first threshold time, it may be determined that a second communication failure type 910 has occurred.

**In** one or more embodiments, if it is determined that the second communication failure type 910 has occurred, the microcontroller may initialize the interface converter and transmit again a transmit packet requesting battery cell state information.

**In** one or more embodiments, if it is determined by the microcontroller that the time for which the Timeout state has lasted exceeds the first threshold time but falls within the second threshold time, it may be determined that a third communication failure type 912 has occurred.

**In** one or more embodiments, if it is determined that the third communication failure type 912 has occurred, the microcontroller may perform a soft shutdown of the analog front end. Here, the soft shutdown may refer to a method in which, on the premise that the interface converter is operating normally and the analog front end has a malfunction, resulting in an error having occurred, the microcontroller transfers a shutdown command to the analog front end via the interface converter, thereby shutting down, software-wise, the analog front end.

In one or more embodiments, if it is determined by the microcontroller that the time for which the Timeout state has lasted exceeds the second threshold time but falls within the third threshold time, it may be determined that a fourth communication failure type 914 has occurred.

In one or more embodiments, if it is determined that the fourth communication failure type 914 has occurred, the microcontroller may perform a hard shutdown of the interface converter. Here, the hard shutdown may refer to a method in which, on the premise that the interface converter has a malfunction, resulting in an error having occurred, the microcontroller shuts down hardware-wise the interface converter by controlling a shutdown pin used to shut down the interface converter. For example, the shutdown pin may include a power management integrated circuit (PMIC). The microcontroller may perform a hard shut down of the interface converter by cutting off the power supply.

The determination of whether there is a communication failure or the type of communication failure by the microcontroller according to one or more embodiments of the present disclosure may be based on a concept of distance from the microcontroller. For example, it is based on the fact that the farther away the data transmission device is relatively from the microcontroller, the greater the possibility that interference or noise will affect the communication between the corresponding device and the microcontroller, and thus, the greater the probability that a communication failure will occur. Accordingly, if it is determined that a communication failure has occurred, it is first assumed that the interface converter located relatively close to the microcontroller is normal, and all or some of the analog front units located relatively far from the microcontroller may be controlled first.

With the configuration as above, the time for which the communication failure occurs can be minimized by estimating the location where the communication failure has occurred inside the battery rack by specifically typifying the communication failure, and having the recovery operation performed differentially according to the type of communication failure or the location where the communication failure has occurred.

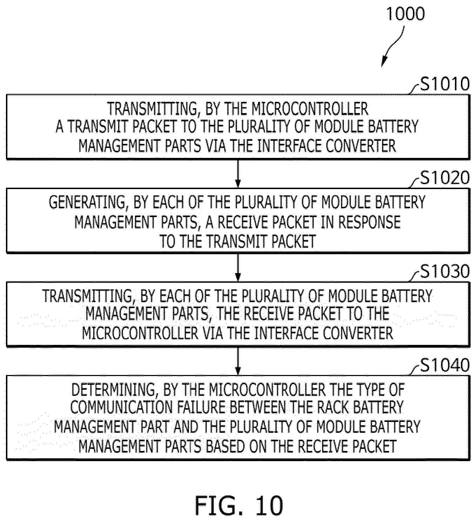

FIG. 10 is a flowchart showing a battery communication management method 1000 according to one or more embodiments of the present disclosure. In one or more embodiments, the battery communication management method 1000 may be performed by at least one processor of the information processing system. The battery communication management method 1000 may begin with the microcontroller transmitting a transmit packet to the plurality of module battery management parts via the interface converter (S1010).

In one or more embodiments, the microcontroller and the interface converter may be included in the rack battery management part.

In one or more embodiments, the plurality of module battery management parts may be connected in series with the rack battery management part. Here, the plurality of module battery management parts and the rack battery management parts may be connected in series in a daisy chain method.

Then, each of the plurality of module battery management parts may generate a receive packet in response to the transmit packet (S1020). Further, each of the plurality of module battery management parts may transmit the receive packet to the microcontroller via the interface converter (S1030). Each of the plurality of module battery management parts may include an analog front end.

Then, the microcontroller may determine the type of communication failure between the rack battery management part and the plurality of module battery management parts based on the receive packet (S1040).

In one or more embodiments, if it is determined as a first communication failure type by the microcontroller, the microcontroller may initialize the analog front end. Here, a case where the number of receive packets is less than the number of analog front ends or a first cyclic redundancy check included in the receive packet and a second cyclic redundancy check obtained by processing the receive packet are different from each other may fall within the first communication failure type of the type of communication failure.

If it is determined as a second communication failure type by the microcontroller, the microcontroller may initialize the interface converter. Here, if a state in which the microcontroller has not received the receive packet or a state in which the data included in the receive packet is an initial value is maintained for a first threshold time, it may fall within the second communication failure type of the type of communication failure.

If it is determined to be a third communication failure type by the microcontroller, the microcontroller may perform a soft shutdown of the analog front end. Here, if a state in which the microcontroller has not received the receive packet or a state in which the data included in the receive packet is an initial value is maintained for a second threshold time, it may fall within the third communication failure type of the type of communication failure, and the second threshold time may be set longer than the first threshold time.

If it is determined to be a fourth communication failure type by the microcontroller, the microcontroller may perform a hard shutdown of the interface converter. Here, if a state in which the microcontroller has not received the receive packet or a state in which the data included in the receive packet is an initial value is maintained for a third threshold time, it may fall within the fourth communication failure type of the type of communication failure, and the third threshold time may be set longer than the second threshold time. As one example, the third threshold time may be set to within 30 seconds, but other threshold times are possible.

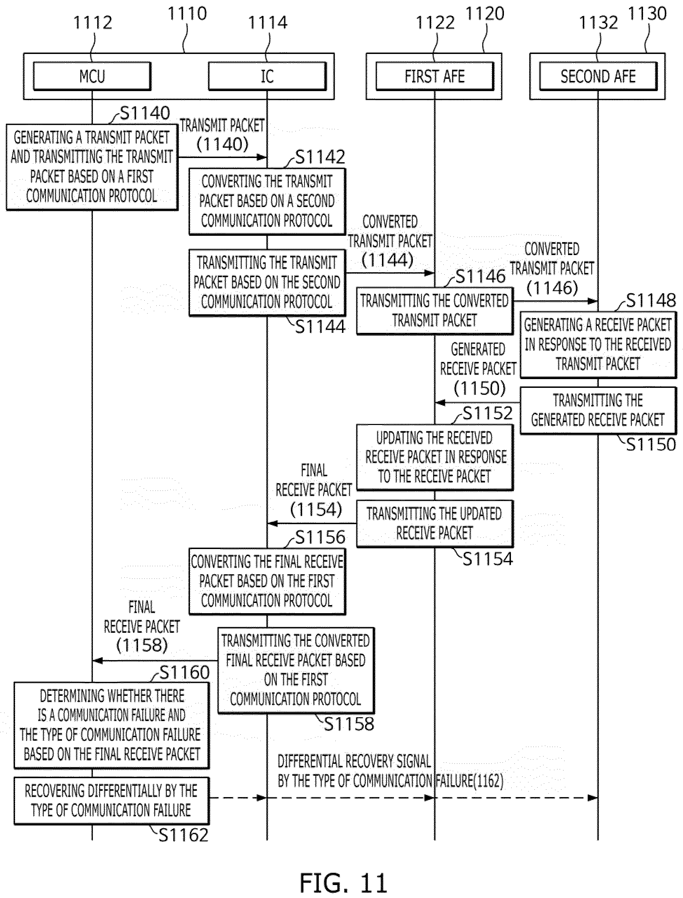

FIG. 11 is a diagram showing a procedure in which the microcontroller determines whether there is a communication failure or the type of communication failure according to one or more embodiments of the present disclosure. FIG. 11 may show a procedure in which the microcontroller determines whether there is a communication failure or the type of communication failure, by taking into account a communication protocol within the rack battery management part, or between the rack battery management part and the plurality of module battery management parts or the plurality of module battery management parts, with reference to FIG. 2.

Referring to FIG. 11, a rack battery management part 1110 may include a microcontroller (MCU) 1112 and an interface converter (IC) 1114. Further, a first module battery management part 1120 may include a first analog front end (first AFE) 1122, and a second module battery management part 1130 may include a second analog front end (second AFE) 1132. Moreover, the rack battery management part 1110 and the plurality of module battery management parts 1120 and 1130 may be connected in series in a daisy chain method.

In one or more embodiments, the microcontroller 1112 may generate a transmit packet including a command requesting battery cell state information, etc., and transmit it to the interface converter based on a first communication protocol (S1140). Accordingly, the interface converter 1114 may receive the transmit packet 1140.

In one or more embodiments, the interface converter 1114 may convert the received transmit packet based on a second communication protocol (S1142). Further, the interface converter 1114 may transmit the converted transmit packet to the first AFE 1122 based on the second communication protocol (S1144). Accordingly, the first AFE 1122 may receive the converted transmit packet 1144. Moreover, the first AFE 1122 may transmit the converted transmit packet to the second AFE (S1146). Accordingly, the second AFE 1132 may receive the converted transmit packet 1146.

In one or more embodiments, the second AFE 1132 may generate a receive packet in response to the received transmit packet (S1148). Further, the second AFE 1132 may transmit the generated receive packet to the first AFE 1122 (S1150). Accordingly, the first AFE 1122 may receive the generated receive packet 1150.

In one or more embodiments, the first AFE 1122 may update the receive packet received from the second AFE 1132 in response to the receive packet (S1152). Further, the first AFE 1122 may transmit the updated receive packet to the interface converter 1114 (S1154). Accordingly, the interface converter 1114 may receive the updated receive packet as a final receive packet 1154.

In one or more embodiments, the interface converter 1114 may convert the final receive packet 1154 received by the second communication protocol based on the first communication protocol (S1156). Further, the interface converter 1114 may transmit the converted final receive packet to the microcontroller 1112 based on the first communication protocol (S1158). Accordingly, the microcontroller 1112 may receive the final receive packet 1158 that serves as the basis for determining whether there is a communication failure and/or the type of communication failure.

In one or more embodiments, the microcontroller 1112 may determine whether there is a communication failure and/or the type of communication failure based on the final receive packet (S1160). Further, if it is determined by the microcontroller 1112 that a communication failure has occurred, the microcontroller 1112 may perform a recovery operation differentially by the type of communication failure (S1162). Accordingly, the microcontroller 1112 may transmit a differential recovery signal 1162 by the type of communication failure to at least one of the first AFE, the second AFE, or the interface converter.

When a communication failure has occurred between various battery management systems within an energy storage system (ESS), a single method is used indistinctively to deal with it, regardless of the type of communication failure. Accordingly, this results in a problem that the communication failure time cannot be shortened and the measurement of battery cell state information cannot be performed smoothly.

According to various embodiments of the present disclosure, when a communication failure occurs between the rack battery management part and the module battery management parts of the energy storage system, the recovery method can be typified differentially according to the type of communication failure. Accordingly, the communication failure time can be minimized and the measurement of the battery cell voltage or temperature can be normalized quickly.

According to various embodiments of the present disclosure, the location where the communication failure has occurred inside the battery rack can be estimated by typifying the communication failure. Further, the time for which the communication failure occurs can be minimized by having the communication failure recovery operation performed differentially according to the type of communication failure or the location where the communication failure has occurred.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### [DESCRIPTION OF SOME REFERENCE SYMBOLS]

110: Rack battery management part
120_1: First module battery management part
120_2: Second module battery management part
120_3: N-th module battery management part
130_1: First battery module
130_2: Second battery module
130_3: N-th battery module

Embodiments are set out in the following clauses:
1. A battery communication management device, comprising:
   a rack battery management part comprising a microcontroller and an interface converter; and
   a plurality of module battery management parts in serial connection with the rack battery management part and managed by the rack battery management part, wherein:
      each of the plurality of module battery management parts manages a battery module,
      each of the plurality of module battery management parts comprises an analog front end, and
      the microcontroller determines a type of communication failure between the rack battery management part and the plurality of module battery management parts.
2. The battery communication management device of clause 1, wherein the serial connection comprises a daisy chain method.
3. The battery communication management device of clause 1 or clause 2, wherein the microcontroller and the interface converter are connected to each other in a serial peripheral interface communication method.
4. The battery communication management device of any preceding clause, wherein the rack battery management part is connected to the plurality of module battery management parts in a universal asynchronous receiver/transmitter method.
5. The battery communication management device of any preceding clause, wherein:
   the microcontroller transmits a transmit packet to each of the plurality of module battery management parts via the interface converter, and
   each of the plurality of module battery management parts measures state information of the battery module managed by each of the plurality of module battery management parts in response to the transmit packet, each of the plurality of module battery management parts transmitting a receive packet comprising the state information to the microcontroller.
6. The battery communication management device of clause 5, wherein the microcontroller determines the type of communication failure based on the receive packet.
7. The battery communication management device of clause 6, wherein a first communication failure type of the type of communication failure is defined as falling within:
   a case where a number of the receive packets is less than a number of analog front ends, or
   a case where a first cyclic redundancy check within the receive packet and a second cyclic redundancy check obtained by processing the receive packet are different from each other.
8. The battery communication management device of clause 7, wherein if the type of communication failure is determined as the first communication failure type by the microcontroller, the microcontroller initializes the analog front end.
9. The battery communication management device of any of clauses 6 to 8, wherein a second communication failure type of the type of communication failure is defined as falling within:
   a case where the microcontroller has not received the receive packet or a case where data comprised in the receive packet is an initial value maintained for a first threshold time.
10. The battery communication management device of clause 9, wherein if the type of communication failure is determined to be the second communication failure type by the microcontroller, the microcontroller initializes the interface converter.
11. The battery communication management device of clause 9 or clause 10, wherein a third communication failure type of the type of communication failure is defined as falling within:
   a case where the microcontroller has not received the receive packet or a case where the data comprised in the receive packet is an initial value maintained for a second threshold time, and
   wherein the second threshold time is longer than the first threshold time.
12. The battery communication management device of clause 11, wherein if the type of communication failure is determined as the third communication failure type by the microcontroller,
   the microcontroller performs a soft shutdown of the analog front end.
13. The battery communication management device of clause 11 or clause 12, wherein a fourth communication failure type of the type of communication failure is defined as falling within:
   a case where the microcontroller has not received the receive packet or a case where the data comprised in the receive packet is an initial value maintained for a third threshold time, and
   wherein the third threshold time is longer than the second threshold time.
14. The battery communication management device of clause 13, wherein if the type of communication failure is determined as the fourth communication failure type by the microcontroller, the microcontroller performs a hard shutdown of the interface converter.
15. The battery communication management device of clause 13 or clause 14, wherein the third threshold time is 30 seconds or less.
16. A battery communication management method, comprising:
   transmitting, by a microcontroller, a transmit packet to a plurality of module battery management parts via an interface converter;
   generating, by each of the plurality of module battery management parts, a receive packet in response to the transmit packet;
   transmitting, by each of the plurality of module battery management parts, the receive packet to the microcontroller via the interface converter; and
   determining, by the microcontroller, a type of communication failure between a rack battery management part and the plurality of module battery management parts based on the receive packet, wherein:
      the rack battery management part comprises the microcontroller and the interface converter,
      the plurality of module battery management parts are connected in series with the rack battery management part, and
      each of the plurality of module battery management parts comprises an analog front end.
17. The battery communication management method of clause 16, wherein a first communication failure type of the type of communication failure is defined as falling within:
   a case where a number of the receive packets is less than a number of the analog front end, or a case where a first cyclic redundancy check comprised in the receive packet and a second cyclic redundancy check obtained by processing the receive packet are different from each other, the method further comprising:
   initializing, by the microcontroller, the analog front end if the type of communication failure is determined as the first communication failure type by the microcontroller.
18. The battery communication management method of clause 16 or clause 17, wherein a second communication failure type of the type of communication failure is defined as falling within:
   a case where the microcontroller has not received the receive packet or a case where data comprised in the receive packet is an initial value maintained for a first threshold time, the method further comprising:
   initializing, by the microcontroller, the interface converter if the type of communication failure is determined as the second communication failure type by the microcontroller.
19. The battery communication management method of clause 18, wherein a third communication failure type of the type of communication failure is defined as falling within:
   a case where the microcontroller has not received the receive packet, or
   a case where the data comprised in the receive packet is an initial value maintained for a second threshold time, and
   wherein the second threshold time is longer than the first threshold time, the method further comprising performing, by the microcontroller, a soft shutdown of the analog front end if the type of communication failure is determined as the third communication failure type by the microcontroller.
20. The battery communication management method of clause 19, wherein a fourth communication failure type of the type of communication failure is defined as falling within:
   a case where the microcontroller has not received the receive packet, or
   a case where the data comprised in the receive packet is an initial value maintained for a third threshold time, wherein:
      the third threshold time is longer than the second threshold time, and
      the microcontroller performs a hard shutdown of the interface converter if the type of communication failure is determined as the fourth communication failure type by the microcontroller.

## Claims

1. A battery communication management device, comprising:
a rack battery management part (110, 1110) comprising a microcontroller (210, 1112) and an interface converter (212, 1114); and
a plurality of module battery management parts (120, 1120, 1130) in serial connection with the rack battery management part (110, 1110) and managed by the rack battery management part (110, 1110), wherein:
each of the plurality of module battery management parts (120, 1120, 1130) manages a battery module (130),
each of the plurality of module battery management parts (120, 1120, 1130) comprises an analog front end (220, 1122, 1132), and
the microcontroller (210, 1112) determines a type of communication failure between the rack battery management part (110, 1110) and the plurality of module battery management parts (120, 1120, 1130).

2. The battery communication management device as claimed in claim 1, wherein the serial connection comprises a daisy chain method.

3. The battery communication management device as claimed in claim 1 or claim 2, wherein the microcontroller (210, 1112) and the interface converter (212, 1114) are connected to each other in a serial peripheral interface communication method.

4. The battery communication management device as claimed in any preceding claim, wherein the rack battery management part (110, 1110) is connected to the plurality of module battery management parts (120, 1120, 1130) in a universal asynchronous receiver/transmitter method.

5. The battery communication management device as claimed in any preceding claim, wherein:
the microcontroller (210, 1112) transmits a transmit packet (1140, 1144, 1146) to each of the plurality of module battery management parts (120, 1120, 1130) via the interface converter (212, 1114), and
each of the plurality of module battery management parts (120, 1120, 1130) measures state information of the battery module (130) managed by each of the plurality of module battery management parts (120, 1120, 1130) in response to the transmit packet (1140, 1144, 1146), each of the plurality of module battery management parts (120, 1120, 1130) transmitting a receive packet (1150, 1154, 1158) comprising the state information to the microcontroller (210, 1112).

6. The battery communication management device as claimed in claim 5, wherein the microcontroller (210, 1112) determines the type of communication failure based on the receive packet (1150, 1154, 1158).

7. The battery communication management device as claimed in claim 6, wherein a first communication failure type of the type of communication failure is defined as falling within:
a case where a number of the receive packets (1150, 1154, 1158) is less than a number of analog front ends (220, 1122, 1132), or
a case where a first cyclic redundancy check within the receive packet (1150, 1154, 1158) and a second cyclic redundancy check obtained by processing the receive packet (1150, 1154, 1158) are different from each other.

8. The battery communication management device as claimed in claim 7, wherein if the type of communication failure is determined as the first communication failure type by the microcontroller (210, 1112), the microcontroller (210, 1112) initializes the analog front end (220, 1122, 1132).

9. The battery communication management device as claimed in any of claims 6 to 8, wherein a second communication failure type of the type of communication failure is defined as falling within:
a case where the microcontroller (210, 1112) has not received the receive packet (1150, 1154, 1158) or a case where data comprised in the receive packet (1150, 1154, 1158) is an initial value maintained for a first threshold time.

10. The battery communication management device as claimed in claim 9, wherein if the type of communication failure is determined to be the second communication failure type by the microcontroller (210, 1112), the microcontroller (210, 1112) initializes the interface converter (212, 1114).

11. The battery communication management device as claimed in claim 9 or claim 10, wherein a third communication failure type of the type of communication failure is defined as falling within:
a case where the microcontroller (210, 1112) has not received the receive packet (1150, 1154, 1158) or a case where the data comprised in the receive packet (1150, 1154, 1158) is an initial value maintained for a second threshold time, and
wherein the second threshold time is longer than the first threshold time.

12. The battery communication management device as claimed in claim 11, wherein if the type of communication failure is determined as the third communication failure type by the microcontroller (210, 1112),
the microcontroller (210, 1112) performs a soft shutdown of the analog front end (220, 1122, 1132).

13. The battery communication management device as claimed in claim 11 or claim 12, wherein a fourth communication failure type of the type of communication failure is defined as falling within:
a case where the microcontroller (210, 1112) has not received the receive packet (1150, 1154, 1158) or a case where the data comprised in the receive packet (1150, 1154, 1158) is an initial value maintained for a third threshold time, and
wherein the third threshold time is longer than the second threshold time.

14. The battery communication management device as claimed in claim 13, wherein if the type of communication failure is determined as the fourth communication failure type by the microcontroller (210, 1112), the microcontroller (210, 1112) performs a hard shutdown of the interface converter (212, 1114).

15. The battery communication management device as claimed in claim 13 or claim 14, wherein the third threshold time is 30 seconds or less.
